Europäisches Patentamt

European Patent Office

Office européen des brevets

(11) Veröffentlichungsnummer: **0 329 844**

**A2**

## (12) EUROPÄISCHE PATENTANMELDUNG

(21) Anmeldenummer: **88120797.1**

(22) Anmeldetag: **13.12.88**

(51) Int. Cl.4: **A47G 19/26**

(30) Priorität: **22.02.88 DE 8802256 U**

(43) Veröffentlichungstag der Anmeldung:
**30.08.89 Patentblatt 89/35**

(84) Benannte Vertragsstaaten:
**BE DE ES FR IT**

(71) Anmelder: **Haushaltprodukte Vertriebs GmbH**
**Graf-von-Zeppelin-Strasse**
**D-5430 Montabaur(DE)**

(72) Erfinder: **de Boer, Simon**
**Schlehenweg 18**
**D-5426 Fachbach(DE)**

(74) Vertreter: **Ninnemann, Detlef, Dipl.-Ing.**
**Patentanwalt**
**Delbrückstrasse 8**
**D-2800 Bremen 1(DE)**

(54) Behälter für zu kühlende Speisen.

(57) Behälter mit einem einseitig offenen, zylindrischen Gehäuse 1 und einem Deckel 2 zum Verschließen des Gehäuses 1, wobei der Deckel 2 zur Aufnahme eines Kühlelements 3 im Querschnitt U-förmig ausgebildet ist, insbesondere zur Aufnahme zu kühlender Speisen wie Schlagsahne o. dgl. Der Rand des Deckels 2, der Rand des Gehäuses 1 sowie der Rand der Bodenfläche 11 des Gehäuses 1 sind so ausgebildet, daß der Deckel 2 als Abdeckung der offenen Fläche des Gehäuses 1 und/oder als Untersatz für das Gehäuse 1 einsetzbar ist. Das Kühlelement 3 ist dem Deckel 2 entnehmbar.

EP 0 329 844 A2

## Behälter für zu kühlende Speisen

Die Erfindung betrifft einen Behälter für zu kühlende Speisen der im Oberbegriff des Anspruchs 1 angegebenen Art.

Zum Aufbewahren von zu kühlenden Speisen wie Schlagsahne oder dgl. werden diese üblicherweise in eine Glas- oder Kunststoffschüssel gefüllt und die Schüssel mit einem Dekkel oder einer Folie verschlossen in einen Kühlschrank gestellt. Wird die Schüssel mit der darin befindlichen Speise dem Kühlschrank zum Verzehr entnommen, so hält die kühlende Wirkung der Schüssel, insbesondere im Fall einer Kunststoffschüssel, nur kurzfristig an, so daß bereits nach verhältnismäßig kurzer Zeitdauer die Speise nicht mehr für den Verzehr geeignet ist.

Aus dem DE-U-78 33 140 ist ein Behälter mit Deckel zum Halten auf einer gewollten Temperatur, Kühlen oder Erwärmen von Gütern, insbesondere Lebensmitteln, bekannt, der einen geteilten Deckel mit einem zum Behälter offenen Hohlraum und einen umlaufenden Wulst im Hohlraum des Deckels an der dem Behälter zugekehrten Kante aufweist. Der Hohlraum im Deckel entspricht der Größe eines üblichen Kühlakkus. Infolge der umlaufenden Wulst im Deckel kann der Kühlakku so im offenen Hohlraum des Deckels angeordnet werden, daß der Kühlakku auch bei auf dem Behälter aufgesetztem Deckel nicht herabfallen kann. Auf diese Weise ist es möglich, im Behälter befindliche Speisen auch dann zu kühlen, wenn der Behälter nicht in einem Kühlgerät angeordnet ist. Ein Kühlen der im Behälter befindlichen Lebensmittel bei abgenommenem Deckel ist nicht oder nur in labiler Stellung möglich. Eine Verwendung des Behälters zu anderen als Kühlzwecken ist nicht vorgesehen, da der Kühlakku dem Deckel nicht ohne weiteres zu entnehmen ist.

Aufgabe der vorliegenden Erfindung ist es, einen Behälter für zu kühlende Speisen der eingangs genannten Gattung zu schaffen, der sich zum längerfristigen Aufbewahren von wärmeempfindlichem Gut sowohl bei aufgesetztem als auch bei abgenommenem Deckel eignet, der leicht handhabbar und vielseitig verwendbar ist und eine sichere Verbindung von Deckel und Behälter in jeder Kühlstellung ermöglicht sowie einen geringen Platzbedarf aufweist, und der eine vom Dekkel getrennte Aufbewahrung eines Kühlelementes ermöglicht.

Diese Aufgabe wird mit den kennzeichnenden Merkmalen des Anspruchs 1 gelöst.

Der erfindungsgemäße Behälter ermöglicht eine langfristige Aufbewahrung von zu kühlenden Speisen, insbesondere von Schlagsahne innerhalb und außerhalb eines Kühlschranks, wobei der Behälter durch Mehrfachverwendung seiner Einzelteile platzsparend unterzubringen ist und in beiden Fällen ein gefälliges Äußeres bietet und eine sichere Verbindung von Gehäuse und Deckel in jeder Stellung gewährleistet. Durch die Möglichkeit der Entnahme des Kühlelementes aus dem Deckel ist ein vom Deckel getrenntes Unterbringen des Kühlelementes in einem Kühlschrank möglich. Außerdem wird dadurch die Voraussetzung dafür geschaffen, daß der Deckel die Funktion einer Abdeckhaube einnimmt, wenn in dem Gehäuse nicht zu kühlendes Gut aufbewahrt wird.

Eine vorteilhafte Ausgestaltung des Behälters ist dadurch gekennzeichnet, daß das Gehäuse an seiner offenen Fläche mit einem umlaufenden Absatz und an seiner Bodenfläche mit einer umlaufenden Ausnehmung versehen ist und daß der Außendurchmesser des umlaufenden Bordes gleich dem Innendurchmesser des umlaufenden Absatzes und der Durchmesser der umlaufenden Ausnehmung gleich dem Innendurchmesser des Deckels ist.

Diese Ausgestaltung ermöglicht eine formschlüssige Verbindung des Deckels mit dem Gehäuse sowohl im offenen als auch im geschlossenen Zustand des Behälters. Gleichzeitig wird dadurch sichergestellt, daß im offenen Zustand des Behälters, in dem der Deckel als Untersatz dient, die Kühlwirkung des im Deckel befindlichen Kühlelementes nicht durch Öffnungen oder Schlitze verlorengeht sondern im wesentlichen auf den Behälterboden ausgeübt wird.

Zusätzlich ermöglicht die spezielle Ausgestaltung des Gehäuses ein Stapeln mehrerer Gehäuse übereinander, da in den umlaufenden Absatz eines Gehäuses die umlaufende Ausnehmung eines weiteren Gehäuses oder ein um 180° gedrehter Deckel einsetzbar ist, in dessen Öffnung ein weiteres Gehäuse einsetzbar ist usw.

Eine weitere vorteilhafte Ausgestaltung der erfindungsgemäßen Lösung ist dadurch gekennzeichnet, daß der Durchmesser des Kühlelementes geringfügig kleiner als der Innendurchmesser des Deckels ist, und daß das Kühlelement eine sehnenförmige Abflachung und einen in einer der sehnenförmigen Abflachung gegenüberliegenden Ausnehmung angeordneten Füllnippel aufweist.

Infolge der sehnenförmigen Abflachung und der gegenüberliegenden Ausnehmung kann das Kühlelement in einfacher Weise in den Deckel eingelegt und entnommen werden, ohne daß die Gefahr des Einklemmens im Deckel besteht. Wird die zu kühlende Speise im Kühlschrank aufbewahrt, so verschließt der Deckel das Gehäuse, während das Kühlelement bspw. in das Gefrierfach gelegt werden kann. Wird die zu kühlende Speise zum Verzehr dem Kühlschrank entnommen, so wird der Deckel vom Gehäuse abgenommen, gewendet und das Kühlelement in den nach oben offenen Deckel eingelegt und das Gehäuse mit seiner an der Bodenfläche vorgesehenen, umlaufenden Ausnehmung in den umlaufenden Bord des Deckels eingesetzt. Auf diese Weise wird die zu kühlende Speise wirklich kalt und lange frisch gehalten.

Da gemäß einer weiteren vorteilhaften Ausgestaltung der Erfindung die Dicke des Kühlelementes gleich der Höhe des Deckels abzüglich der Höhe der umlaufenden Ausnehmung ist, wird die Kühlwirkung des Kühlelementes optimal ausgenutzt und direkt an die Bodenfläche des Gehäuses abgegeben.

In einer weiteren vorteilhaften Ausgestaltung ist ein zusätzlicher Deckel vorgesehen, der gleichförmig ausgebildet ist, so daß die zu kühlende Speise auch außerhalb eines Kühlschranks gekühlt und abgedeckt werden kann. Außerdem kann der weitere Deckel im nach oben offenen Zustand zur Aufnahme eines weiteren Kühlelements dienen, so daß die zu kühlende Speise auch von oben gekühlt wird. In diesem Fall kann ein weiterer Behälter, zu dem beispielsweise dieser Deckel gehört, mit seiner umlaufenden Ausnehmung eingesetzt werden, so daß mehrere Schüsseln gleichzeitig aufeinandergestapelt außerhalb eines Kühlschranks aufgestellt werden können, ohne daß der Inhalt an Frische verliert. Zur besseren Unterscheidbarkeit der beiden Deckel sind diese mit einer unterschiedlichen Farbgebung versehen.

Nach einer weiteren, vorteilhaften Ausgestaltung des erfindungsgemäßen Behälters, ist das Gehäuse an seiner offe nen Fläche sowie an seiner Bodenfläche mit spiegelsymmetrisch angeordneten und gleich ausgebildeten Absätzen versehen. Im Außendurchmesser stimmen Deckel und Gehäuse überein, jedoch ist der Innendurchmesser des Dekkels größer gewählt als der Innendurchmesser des Gehäuses.

Diese Ausgestaltung ermöglicht neben der formschlüssigen Verbindung des Deckels mit dem Gehäuse sowohl im offenen als auch im geschlossenen Zustand des Behälters, eine glatte äußere Form des Behälters ohne vorspringende Absätze und genügt somit auch besonderen hygienischen Ansprüchen, da keine "Schmutzkanten" vorhanden sind. Außerdem besteht die Möglichkeit, ein im Deckel angeordnetes Kühlelement auf dem Innenrand des Gehäuses abzulegen.

Der Deckel weist an der Stirnfläche seiner, dem Gehäuse zugewandten, umlaufenden Deckelwand einen Zentrierabsatz auf, der in den umlaufenden Absatz des Gehäuses eingreift, wobei der Deckel mit der Stirnfläche der Deckelwand auf dem Gehäuserand aufliegt.

Diese Ausgestaltung des Deckels hat zum einen den Vorteil, daß aufgrund des Zentrierabsatzes ein sicheres Stapeln mehrerer Gehäuse übereinander ermöglicht ist, zum andern, daß durch das unmittelbare Aufliegen der Stirnfläche der Deckelwand auf dem Gehäuserand eine geschlossene, äußere Oberfläche des Behälters möglich wird, so daß auch durch diese Maßnahme besondere Hygieneanforderungen berücksichtigt sind.

Durch die Anordnung eines Kühlelements in dem auf das Gehäuse aufgesetzen Deckel, das auf dem Innenrand des Ab satzes des Gehäuserandes aufliegt, wird es möglich, das im Gehäuse befindliche, zu kühlende Gut zusätzlich von oben zu kühlen. Außerdem ist hierdurch ein leichtes Entfernen des Kühlelementes aus dem Deckel ermöglicht, da nach dem Abnehmen des Deckels das auf dem Gehäuserand aufliegende Kühlelement frei zugänglich ist.

Zur Verbindung zweier aufeinander gestapelter Gehäuse ist ein Deckel vorgesehen, der einen im Querschnitt U-förmigen Aufnahmeteil mit einem mittig, außen am Aufnahmeteil umlaufenden Auflagebord. Der Außendurchmesser des Auflagebordes ist hierbei dem Außendurchmesser der Gehäuse angepasst, so daß bei Anliegen der beidseitig des Deckels angeordneten Gehäuse mit ihren Gehäuserändern auf dem Auflagebord keine Abweichung in der in sich geschlossenen, glatten Oberfläche des Behälters gegeben ist.

Um einen möglichst verlustarmen Temperaturübergang von dem in dem Deckel angeordneten Kühlelement auf das in dem Gehäuse unterhalb des Deckels angeordnete, zu kühlende Gut zu erzielen, ist der Deckel ebenso wie der Boden des Gehäuses möglichst dünnwandig ausgeführt.

Nach einem weiteren Ausführungsbeispiel des Behälters ist das Kühlelement im Deckel befestigbar. Hierdurch wird die Handhabung des Behälters erheblich vereinfacht, da das Kühlelement so zusammen mit dem Deckel vom Gehäuse abgenommen werden kann. Nach wie vor bleibt hierdurch jedoch die vorteilhafte Möglichkeit erhalten, das Kühlelement bei Bedarf aus dem Deckel herauszunehmen.

Mittels einer bajonettverschlußartigen Verbindung zwischen dem Kühlelement und dem Deckel wird dem Benutzer des Behälters eine besonders komfortable Möglichkeit zum Einsetzen bzw. Entnehmen des Kühlelements geboten.

Die Realisierung dieser bajonettverschlußartigen Verbindung setzt jedoch eine besondere Gestaltung des Deckels sowie des Kühlelements des Behälters voraus. Aus diesem Grund ist am Zentrierabsatz des Deckels ein bereichsweise mit Durchbrüchen versehener, umlaufender Innenbord vorgesehen. Nach Art eines Bajonettverschlusses ist das Kühlelement in seinem Umfangsbereich komplementär zum Innenbord des Deckels gestaltet und weist am Umfang angeordnete Fortsätze auf, die in ihrer Teilung mit den Durchbrüchen im Innenbord des Deckels übereinstimmen.

Zur einfachen Betätigung dieser formschlüssigen Verbindung ist der Abstand zwischen dem Innenbord und dem Boden des Deckels geringfügig größer gewählt als die Dicke der Fortsätze des Kühlelements.

Mehrere Ausführungsbeispiele der Erfindung werden nachfolgend anhand der Zeichnungen näher erläutert. Es zeigen:

Figur 1 einen Querschnitt durch den Deckel in der Verschlußstellung;

Figur 2 einen Querschnitt durch das Gehäuse;

Figur 3 einen Querschnitt durch den Deckel in der Kühlstellung als Untersatz;

Figur 4 einen Querschnitt durch einen Deckel bzw. Untersatz mit durchgehendem Bord;

Figur 5 einen Querschnitt durch das Kühlelement;

Figur 6 eine Draufsicht auf das Kühlelement;

Figur 7 einen Querschnitt durch zwei aufeinandergestapelte Gehäuse mit einem zwischenliegenden Deckel;

Figur 8 einen Querschnitt durch zwei aufeinandergestapelte Gehäuse mit einem zwischenliegenden Deckel entsprechend einem weiteren Ausführungsbeispiel;

Figur 9 einen Querschnitt durch einen Deckel mit eingesetztem Kühlelement gemäß einem weiteren Ausführungsbeispiel;

Figur 10 eine Unteransicht des in Figur 9 dargestellten Deckels mit Kühlelement und

Figur 11 eine Draufsicht auf das gemäß Figur 9, 10 in den Deckel eingesetze Kühlelement.

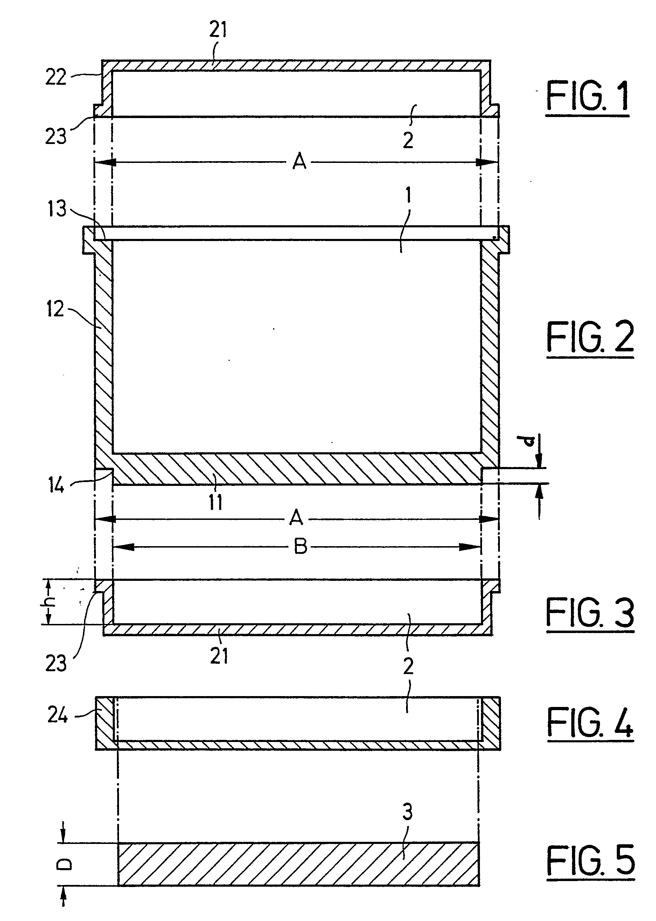

Die in den Figuren 1 bis 4 dargestellten Querschnitte durch den Deckel, das Gehäuse und das Kühlelement sind so dargestellt, daß die Verbindung der einzelnen Teile durch strichpunktierte Linien verdeutlicht wird.

Figur 1 zeigt einen Querschnitt durch den Deckel in einer Stellung zum Verschließen des in Figur 2 dargestellten Gehäuses. Der Deckel 2 ist im Querschnitt U-förmig ausgebildet und weist einen Boden 21 sowie eine zylindrische Wand 22 auf. Die Wand 22 ist an der offenen Seite des Deckels 2 mit einem umlaufenden Bord 23 versehen, der als geringfügige Verdickung der Wand 22 des Deckels 2 ausgebildet ist.

Das Gehäuse 1 weist einen Gehäuseboden 11 und eine zylindrische Gehäusewand 12 auf, die an der offenen Fläche des Gehäuses 1 mit einem umlaufenden Absatz 13 versehen ist. Der Innendurchmesser A des umlaufenden Absatzes 13 entspricht dabei dem Außendurchmesser des umlaufenden Bordes 23 des Deckels 2, wobei ein geringfügiges Spiel zwischen dem umlaufenden Bord 23 und dem umlaufenden Absatz 13 durch einen etwas geringeren Außendurchmesser A des umlaufenden Bordes 23 erzielt wird.

Im geschlossenen Zustand des Behälters wird das umlaufende Bord 23 des Deckels 2 in den umlaufenden Absatz 13 des gehäuses 1 eingesetzt, so daß das im Behälter befindliche zu kühlende Gut, beispielsweise Schlagsahne, bei der Unterbringung bspw. in einem Kühlschrank gegenüber fremden Gerüchen geschützt ist.

Die Bodenfläche 11 des Gehäuses 1 ist mit einer umlaufenden Ausnehmung 14 versehen, deren Durchmesser B dem Innendurchmesser des Deckels 2 entspricht. Der Außendurchmesser des umlaufenden Bordes 23 wiederum ist gleich dem Außendurchmesser der Gehäusewand 12, so daß der umlaufende Bord 23 bündig mit der Seitenwand 12 des Gehäuses 1 abschließt, wenn das Gehäuse 1 auf den Deckel 2 aufgesetzt ist.

Figur 3 zeigt den Deckel 2 in seiner Stellung als Untersatz, in der er um 180° gegenüber der Verschlußstellung gemäß Figur 1 gedreht ist. In dieser Stellung greift der umlaufende Bord 23 in die umlaufende Ausnehmung 14 des Gehäuses 1 ein, so daß das Gehäuse 1 um das Maß d der Höhe der umlaufenden Ausnehmung 14 in den Deckel 2 hineinragt.

Figur 4 zeigt einen Deckel mit durchgehendem Bord 24, der sich insbesondere zum Stapeln mehrerer Schüsseln übereinander bzw. zum Einlegen in den oberen Rand eines Gehäuses mit gleichzeitiger Aufnahme eines Kühlelements eignet.

Die Dicke D des in Figur 5 dargestellten Kühlelementes 3 ist so bemessen, daß es den gesamten Hohlraum im Deckel 2 ausfüllt, wenn das Gehäuse 1 in den Deckel 2 in der in Figur 3 dargestellten Untersetzstellung eingesetzt ist. Auf diese Weise ist eine optimale Kühlung der im Gehäuse 1 befindlichen Schlagsahne gewährleistet.

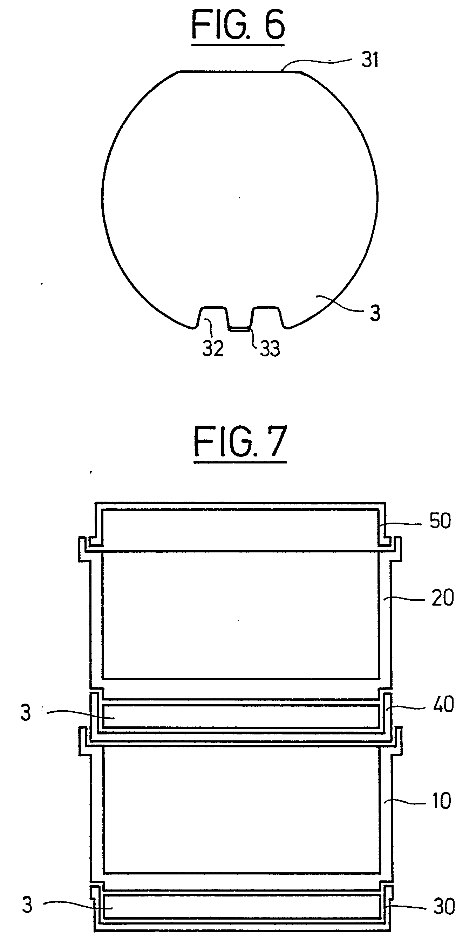

Figur 6 zeigt eine Draufsicht auf das Kühlelement 3, das kreisscheibenförmig ausgebildet ist und eine sehnenförmige Abflachung 31 aufweist, der gegenüber eine Ausnehmung 32 mit darin befindlichem Füllnippel 33 angeordnet ist. Zum Einlegen des Kühlelementes 3 in den Deckel 2 bzw. zum Herausnehmen des Kühlelementes 3 aus dem Deckel 2 kann das Kühlelement 3 an der sehnenförmigen Abflachung 31 und der Ausnehmung 32 angefaßt bzw. mit einem geeigneten Gegenstand, bspw. einem Löffel aus dem Deckel 2 herausgehoben werden.

Zur Aufbewahrung von Schlagsahne oder anderem wärmeempfindlichen Gut wird das Gehäuse 1 gemäß den Figuren 1 und 2 mit dem Deckel 2 verschlossen, wobei durch das Eingreifen des umlaufenden Bordes 23 in den umlaufenden Absatz 13 ein weitestgehend geruchsdichter Verschluß gewährleistet ist. Das Kühlelement 3 kann zur vorbereitenden Kühlung in das Gefrierfach des Kühlschranks eingelegt werden, wo es entsprechend vorgekühlt werden kann.

Wird die Sahneschüssel zum Verzehr des Schlagguts dem Kühlschrank entnommen, so wird der Deckel 2 vom Gehäuse 1 abgehoben, um 180° gedreht, das ggf. dem Gefrierfach entnommene Kühlelement 3 in den nach oben offenen Deckel 2 eingelegt und der Behälter 1 mit seiner umlaufenden Ausnehmung 14 auf den umlaufenden Bord 23 aufgesetzt, so daß eine formschlüssige Verbindung zwischen der Bodenfläche 11 des Gehäuses 1 und dem Deckel 2 gegeben ist.

Zur Ausnutzung der kühlenden Wirkung des in den als Untersatz dienenden Deckel eingelegten Kühlelements und gleichzeitigen Abdeckung des Gehäuses dient ein zusätzlicher Deckel, der vorzugsweise andersfarbig ausgebildet ist.

Figur 7 zeigt einen Querschnitt durch zwei aufeinandergestapelte Gehäuse 10, 20 mit einem dazwischen angeordneten Deckel 40, der ebenso ein Kühlelement aufweist, wie der unter dem unteren Behälter 10 befindliche und als Untersatz dienende Deckel 30.

Zum Abdecken des Inhalts des oberen Gehäuses 20 ist ein zusätzlicher Deckel 50 vorgesehen, der natürlich entfallen kann. Der untere Deckel 30 und der obere Deckel 50 können mit einem umlaufenden Bord versehen, d.h. gemäß Figur 3 ausgebildet sein, während der mittlere Deckel 40 vorzugsweise einen durchgehenden Bord gemäß Figur 4 aufweist.

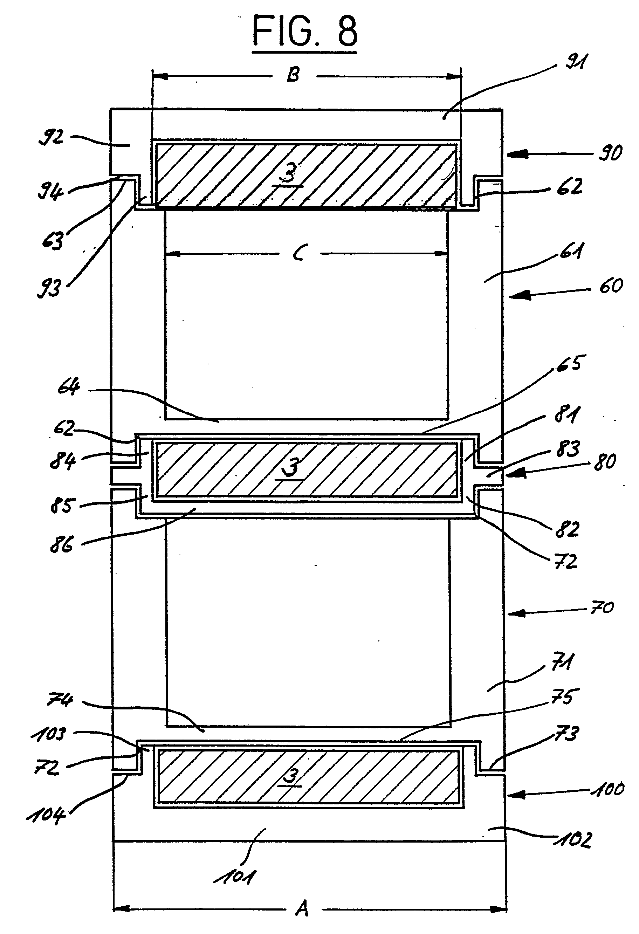

Ein weiteres Ausführungsbeispiel des Behälters zeigt Figur 8. Dargestellt ist hier ein Querschnitt durch zwei aufeinander gestapelte Gehäuse 60, 70 mit einem dazwischen angeordneten Deckel 80, der ebenso wie die untereinander identisch ausgeführten, den Behälter nach oben und unten abschließenden Deckel 90, 100 ein Kühlelement 3 enthält.

Die Gehäuse 60, 70 weisen zu ihrer Querachse symmetrische Konturen auf. Die Stirnflächen der mit einer zylindrischen Gehäusewandung 61, 71 versehenen Gehäuse 60, 70 weisen einen durch einen Absatz 62, 72 gegenüber der Gehäusewandung 61, 71 in seiner Wandstärke reduzierten Gehäuserand 63, 73 auf.

Im Bereich eines das Gehäuse 60, 70 nach unten abschließenden Gehäusebodens 64, 74 geht der Absatz 62, 72 in eine Bodenfläche 65, 75 über.

Die U-förmig ausgeführten, mit einem Boden 91, 101 und einer daran anschließenden zylindrischen Deckelwand 92, 102 versehenen Deckel 90, 100 weisen an ihrer dem Gehäuse 60, 70 zugewandten Stirnfläche einen Zentrierabsatz 93, 103 auf. Der Zentrierabsatz 93, 103 des Deckels 90, 100 ist passgenau in den Absatz 62, 72 des Gehäuses 60, 70 eingeführt, so daß die Stirnfläche des Deckels 90, 100 mit einem verbleibenden Anlagebereich 94, 104 auf dem Gehäuserand 63, 73 des Gehäuses 60, 70 zur Anlage kommt. Durch diese Art der Verbindung der Deckel 90, 100 mit den Gehäusen 60, 70 ist ein glatter, absatzloser Übergang von der Deckelwand 92, 102 zur Gehäusewand 61,71 gegeben.

Zur Erzielung einer guten Isolierung der Behälterinnenräume gegenüber der Außentemperatur sind die Böden 91, 101 der Deckel 90, 100, die Deckelwände 92, 102 sowie die Behälterwände relativ dickwandig ausgeführt.

Aufgrund des gegenüber dem Innendurchmesser B des Deckels 90 verringerten Innendurchmessers C des Gehäuses 60 kann das Kühlelement 3 auf dem Innenrand des Absatzes 62 des Gehäuses 60 aufliegen, so daß das Kühlelement 3 des Behälters getrennt vom Deckel 90 entnommen werden kann.

Der die Gehäuse 60, 70 miteinander verbindende Deckel 80 besteht aus einem U-förmigen Aufnahmeteil 81, dessen zylindrische Wandung 82 übergeht in einen seitlich abstehenden, umlaufenden Auflagebord 83. Der Auflagebord 83 ist in mittlerer Höhe der Wandung 82 vorgesehen, so daß beidseitig des Auflagebords 83 durch die so abgeteilten Wandungsbereiche Zentrierabsätze 84, 85 geschaffen sind. Zur offenen Fläche des Gehäuses 70 hin ist der Deckel 80 mit einem Boden 86 versehen, so daß im Aufnahmeteil 81 des Deckel 80 ein Kühlelement 3 angeordnet werden kann.

Die Verbindung zwischen dem Deckel 80 und den Behältern 60, 70 ist analog der Verbindung zwischen den Deckeln 90, 100 und den Gehäusen 60, 70 ausgeführt, so daß im Bereich des Deckels 80 die Gehäuseränder 63, 73 der Gehäuse 60, 70 an einander gegenüberliegenden Seiten des Auflagebords 83 zur Anlage kommen. Auch durch diese Verbindung bleibt nach außen hin die glatte, absatzlose Oberfläche beim Übergang vom Gehäuse 60 zum Gehäuse 70 dee Sahneschüssel erhalten.

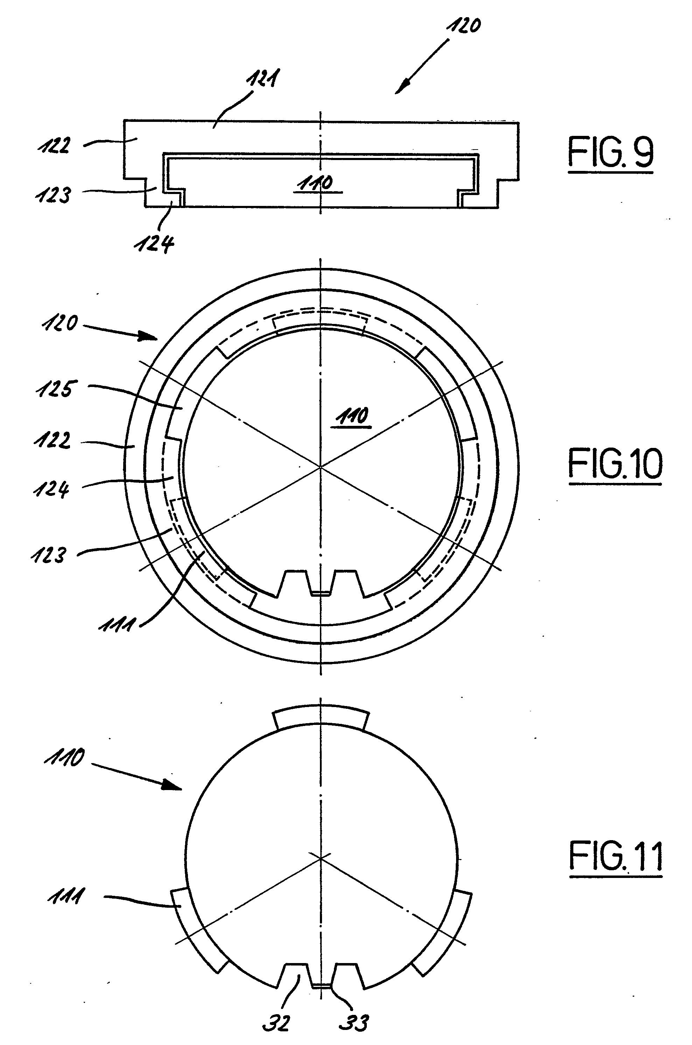

Das Ausführungsbeispiel gemäß Figur 9 zeigt einen Deckel 120 zur Verwendung bei Gehäusen 60, 70, der ebenfalls wie die bereits erläuterten Ausführungen im wesentlichen aus einem Boden 121 mit einer daran anschließenden, zylindrischen Deckelwand 122 besteht.

Im Unterschied zu den in Figur 8 dargestellten Deckeln 90, 100 ist der Deckel 120 an seinem Zentrierabsatz 123 zusätzlich mit einem Innenbord 124 versehen.

Dieser Innenbord 124 weist, wie in Figur 10 dargestellt, bereichsweise Durchbrüche 125 auf, die die Aufnahme eines entsprechend gestalteten Kühlelements 110 ermöglichen. Hierzu weist das ansonsten gleich dem Kühlelement 3 ausgeführte Kühlelement 110 an seinem Umfang verteilt angeordnete Fortsätze 111 auf. Diese Fortsätze 111 sind mit der gleichen Teilung am Umfang des Kühlelements 110 angeordnet wie die Durchbrüche 125 im Innenbord 124 des Deckels 120. Darüberhinaus ist die Dicke D der Fortsätze 111 geringfügig kleiner als der Abstand A zwischen dem Innenbord 124 und dem Boden 121 des Deckels 120.

Diese besondere Ausgestaltung ermöglicht, daß bei einer Drehung des mit den Fortsätzen 111 in die Durchbrüche 125 des Deckels 120 eingelegten Kühlelements 110 die Fortsätze 111 den Innenbord 124 unterschneiden, und es so zu einer bajonettverschlußartigen, formschlüssigen Verbindung zwischen dem Kühlelement 110 und dem Deckel 120 kommt.

Die Erfindung beschränkt sich in ihrer Ausführung nicht auf die vorstehend angegebenen, bevorzugten Ausführungsbeispiele. Vielmehr ist eine Anzahl von Varianten denkbar, welche von der dargestellten Lösung auch bei grundsätzlich anders gearteten Ausführungen Gebrauch machen. So kann die vorstehend beschriebene Sahneschüssel selbstverständlich auch zur Aufbewahrung anderer wärmeempfindlichen Guts dienen, dessen Frische somit auch außerhalb eines Kühlschranks längerfristig erhalten wird.

**Ansprüche**

1. Behälter mit einem einseitig offenen, zylindrischen Gehäuse und einem Deckel zum Verschließen des Gehäuses, wobei der Deckel zur Aufnahme eines Kühlelements im Querschnitt U-förmig ausgebildet ist, insbesondere zur Aufnahme zu kühlender Speisen wie Schlagsahne o. dgl. **dadurch gekennzeichnet, daß** der Rand des Deckels (2), der Rand des Gehäuses (1) sowie der Rand der Bodenfläche (11) des Gehäuses (1) so ausgebildet sind, daß der Deckel (2) als Abdeckung der offenen Fläche des Gehäuses (1) und/oder als Untersatz für das Gehäuse (1) einsetzbar ist, und daß das Kühlelement (3) dem Deckel (2) entnehmbar ist.

2. Behälter nach Anspruch 1, **dadurch gekennzeichnet,** daß das Gehäuse (1) an seiner offenen Fläche mit einem umlaufenden Absatz (13) und an seiner Bodenfläche (11) mit einer umlaufenden Ausnehmung (14) versehen ist, und daß der Außendurchmesser (A) des Deckels (2) gleich dem Innendurchmesser (A) des umlaufenden Absatzes (13) und der Durchmesser der umlaufenden Ausnehmung (14) gleich dem Innendurchmesser (B) des Deckels (2) ist.

3. Behälter nach Anspruch 2, **dadurch gekennzeichnet,** daß der Außendurchmesser (A) des Gehäuses (1) gleich dem Innendurchmesser (A) des umlaufenden Absatzes (13) ist und daß der Innendurchmesser (B) des Deckels (2) gleich dem Innendurchmesser (B) des Gehäuses (1) ist.

4. Behälter nach einem der vorangehenden Ansprüche, **dadurch gekennzeichnet, daß** der Dekkel (2) an seiner offenen Fläche einen umlaufenden Bord (23) aufweist, dessen Außendurchmesser (A) gleich dem Innendurchmesser (A) des umlaufenden Absatzes (13) des Gehäuses (1) ist.

5. Behälter nach einem der vorangehenden Ansprüche, **dadurch gekennzeichnet, daß** der Durchmesser des Kühlelementes (3) geringfügig kleiner als der Innendurchmesser (B) des Deckels (2) ist, und daß das Kühlelement (3) eine sehnenförmige Abflachung (31) und einen in einer der sehnenförmigen Abflachung (31) gegenüberliegenden Ausnehmung (32) angeordneten Füllnippel (33) aufweist.

6. Behälter nach einem der vorangehenden Ansprüche, **dadurch gekennzeichnet, daß** die Dikke (D) des Kühlelementes (3) gleich der Höhe (h) des Dekkels (2) abzüglich der Höhe (d) der umlaufenden Ausnehmung (14) ist.

7. Behälter nach einem der vorangehenden Ansprüche, **dadurch gekennzeichnet, daß** ein zweiter gleichförmiger Deckel (2) als Untersatz oder Dekkel vorgesehen ist.

8. Behälter nach Anspruch 1, **dadurch gekennzeichnet,** daß ein Gehäuse (60, 70) an stirnseitigen·Gehäuserändern (63, 73) seiner offenen Fläche sowie seiner durch den Boden des Gehäuses (60, 70) gebildeten Bodenfläche (65, 75) mit einem Absatz (62, 72) versehen ist, und daß der Außendurchmesser eines Deckels 90, 100) gleich dem Außendurchmesser (A) des Gehäuses (60, 70) und der Innendurchmesser (B) des Deckels (90, 100) größer als der Innendurchmesser (C) des Gehäuses (60, 70) ist.

9. Behälter nach Anspruch 8, **dadurch gekennzeichnet,** daß der Deckel (90, 100) an seiner dem Gehäuse (60, 70) zugewandten, umlaufenden Stirnfläche eines Deckelrandes (92, 102) einen Zentrierabsatz (93, 103) aufweist, der in den umlaufenden Absatz (62, 72) des Gehäuses (60, 70) eingreift, wobei der Deckel (90, 100) mit einem Anlagebereich (94, 104) der Stirnfläche auf dem Gehäuserand·(63, 73) aufliegt.

10. Behälter nach einem der vorangehenden Ansprüche, **dadurch gekennzeichnet, daß** das von dem Deckel (90) aufgenommene Kühlelement (3) auf dem Innenrand des Absatzes (62) des Gehäuses (60) aufliegt.

11. Behälter nach einem der vorangehenden Ansprüche, **dadurch gekennzeichnet, daß** ein ein weiteres Kühlelement (3) aufnehmender Deckel (80) zur Verbindung zweier aufeinander gestapelter Gehäuse (60, 70) vorgesehen ist, der einen im Querschnitt U-förmigen Aufnahmeteil (81) mit einem mittig, außen am Aufnahmeteil (81) umlaufenden Auflagebord (83) aufweist, dessen Außendurchmesser gleich dem des Gehäuses (60, 70) ist.

12. Behälter nach einem der vorangehenden Ansprüche, **dadurch gekennzeichnet,** daß ein Kühlelement (110) im Deckel (80) formschlüssig, vorzugsweise mittels einer bajonettverschlußartigen Verbindung, mit dem Deckel (80) verbunden ist, wobei der Deckel (80) an einem Zentrierabsatz (84) einen bereichsweise mit Durchbrüchen (125) versehenen, umlaufenden Innenbord (124) aufweist und wobei das Kühlelement (110) am Umfang angeordnete Fortsätze (111) aufweist, die in ihrer Teilung mit der Teilung der Durchbrüche (125) im Innenbord (124) des Deckels (80) übereinstimmen.

FIG.1

FIG. 2

FIG. 3

FIG. 4

FIG. 5

## FIG. 6

## FIG. 7

# FIG. 8

FIG.9

FIG.10

FIG.11